Europäisches Patentamt

(19) European Patent Office

Office européen des brevets

(11) Veröffentlichungsnummer: **0 049 775**
**A2**

## (12) EUROPÄISCHE PATENTANMELDUNG

(21) Anmeldenummer: **81107339.4**

(22) Anmeldetag: **17.09.81**

(51) Int. Cl.³: **C 08 F 279/02**
//(C08F279/02, 212/00)

(30) Priorität: **10.10.80 DE 3038264**

(43) Veröffentlichungstag der Anmeldung:
**21.04.82 Patentblatt 82/16**

(84) Benannte Vertragsstaaten:
**BE DE FR GB IT NL SE**

(71) Anmelder: **BASF Aktiengesellschaft
Carl-Bosch-Strasse 38
D-6700 Ludwigshafen(DE)**

(72) Erfinder: **Echte, Adolf, Dr.
Leuschnerstrasse 42
D-6700 Ludwigshafen(DE)**

(72) Erfinder: **Gausepohl, Hermann, Dr.
Neuweg 10
D-6704 Mutterstadt(DE)**

(54) Verfahren zur kontinuierlichen Herstellung von mit Kautschuk modifizierten Polymerisaten von Vinylaromaten.

(57) Die Erfindung betrifft ein Verfahren zur kontinuierlichen Herstellung von mit Kautschuk modifizierten Polymerisaten von Vinylaromaten, wobei man ein Gemisch, das eine monomere aromatische Vinylverbindung und ein kautschukartiges, überwiegend aus 1,3-Dienen aufgebautes Polymerisat, enthält, in Gegenwart von Mercaptanen als Kettenüberträger und gegebenenfalls von Radikalinitiatoren in einer ersten Reaktionszone unter Rühren bis zu einem maximalen Umsatz, $U_{max}$, bezogen auf Monomere(s) führt, der der Beziehung

$$U_{max} = K$$

genügt [K = Kautschukmenge in Gew.%, bezogen auf Monomere(s)], danach dem Reaktionsansatz eine Diallyl-, Diacryl- oder Divinylverbindung als Kettenverlängerer in Mengen von 50 bis 500 ppm, bezogen auf Monomeres, zusetzt und diesen in einer zweiten Reaktionszone unter Rühren bis zu Umsätzen von bis zu etwa 50 Gew.% weiterpolymerisiert und in mindestens einer weiteren Reaktionszone bis zu Umsätzen von 80 bis 90 % polymerisiert, das Polymerisat in einer Entgasungszone von vinylaromatischen Monomeren und gegebenenfalls von Lösungsmittel befreit und letztere in den Prozeß zurückführt.

BASF Aktiengesellschaft                    O.Z.   0050/034707

Verfahren zur kontinuierlichen Herstellung von mit
Kautschuk modifizierten Polymerisaten von Vinylaromaten

Die Erfindung betrifft ein kontinuierliches Verfahren zur
Herstellung von mit Kautschuk modifizierten Polymerisaten
von Vinylaromaten in Gegenwart von Mercaptanen und gegebenenfalls von Radikalinitiatoren in mehreren Reaktionszonen.

Zum Stand der Technik nennen wir

(1) US-PS 3 903 202
(2) US-PS 3 243 481
(3) DE-AS 1 770 392
(4) DE-OS 26 36 092
(5) DE-OS 26 26 969
(6) R.W. Flumerfelt; Ind. Ing. Chem. Fundam. 11 (1972) 3,
    312.

Die kontinuierliche Polymerisation von schlagfestem Polystyrol in zwei, drei oder mehreren Reaktionszonen ist seit
langem bekannt vgl. (1), (2), (3). Nach diesem Stand der
Technik wird ein Kautschuk vom Typ Polybutadien in Monostyrol gelöst und die Lösung in einer Kaskade in mehreren
Reaktionszonen, die einzeln oder von denen mehrere zusammen in einem Reaktor untergebracht sein können, polymerisiert. Kritisch in bezug auf die Einstellung der mittleren Teilchengröße ist dabei die Reaktionszone, in der die
sogenannte Phaseninversion stattfindet. Dies ist in der
Regel die erste oder zweite Reaktionszone. Die mittlere
Teilchengröße wird nach (6) festgelegt durch das Viskositätsverhältnis der dispersen zur kohärenten Phase, ferner
durch das Schergefälle im Reaktor und die Grenzflächenspannung der Phasen. Diese wird durch den Pfropfungsgrad, Vo/BL d.h. die Menge an Polystyrol, die auf den vorgelegten Kautschuk aufgepfropft wurde, entscheidend beeinflußt. Bei gegebenem Pfropfungsgrad und gegebenem Schergefälle nimmt die Teilchengröße mit steigendem Molekulargewicht der Matrix ab, ebenso mit steigendem Pfropfungsgrad. Um ein hohes Molekulargewicht der Matrix zu erhalten, oder bei einem gegebenen Betriebszustand die Pfropfung des Polystyrols auf den Kautschuk erhöhen, ohne Einbußen in der Teilchengröße hinnehmen zu müssen, ist das nur zu erreichen, wenn man die Rührerdrehzahl drosselt. Dieser Maßnahme sind aber dadurch Grenzen gesetzt, daß es bei einer zu geringen Durchmischung der Reaktionslösung zu einer mangelnden Abfuhr der Reaktionswärme und zur Bildung von Gel-Anwachsungen und Stippen kommt.

Es bestand daher die Aufgabe, ein Verfahren vorzuschlagen, das es gestattet, Produkte mit großen Teilchen der Weichphase und einer hohen Viskositätszahl der Matrix oder hoher Pfropfung der Kautschukteilchen herzustellen.

Diese Aufgabe wird erfindungsgemäß durch die im kennzeichnenden Teil des Patentanspruches beschriebene Maßnahme gelöst.

Die kontinuierliche Herstellung von mit Kautschuk modifizierten Polymerisaten von Vinylaromaten ist insbesondere in (2) hinreichend beschreiben (vgl. das Verfahrensprinzip Kessel-Turmkaskade), so daß bezüglich der Durchführung des kontinuierlichen Verfahrens auf diese Druckschrift, sowie auf (1) hingewiesen werden kann.

Als aromatische Vinylverbindungen kommen für das erfindungsgemäße Verfahren Styrol sowie dessen Derivate, wie -Methylstyrol, o-, m-, p-Methylstyrol, 2,4-Dimethylstyrol bzw. tert.-Butylstyrol in Betracht. Bevorzugt wird Styrol alleine verwendet.

An das kautschukartige, überwiegend aus 1,3-Dienen aufgebaute Polymerisat werden keine besonderen Anforderungen gestellt. Es eignen sich sowohl natürliche als auch synthetische Polybutadiene, gleichfalls Polyisoprenkautschuke oder auch Styrol-Butadien-Blockcopolymerisate vom Typ SB bzw. Dreiblock-Copolymerisate vom Typ BSB oder SBS. Besonders bevorzugt werden Dienkautschuke angewendet, die ca. 10 Gew.% 1,2-Vinylanteile aufweisen oder sogenannte high-cis-Typen mit mehr als 96 Gew.% an cis-Struktur.

Das erfindungsgemäße Verfahren kann sowohl in Masse als auch in Lösung durchgeführt werden. Bei der Polymerisation in Masse wird der Kautschuk in dem zu polymerisierenden vinylaromatischen Monomeren gelöst und dann die Polymerisation begonnen. Als geeignete Lösungsmittel kommen Toluol, Xylol, Ethylbenzol, Methylethylketon oder Tetrahydrofuran in Frage. Die Lösungsmittel werden in Mengen von 2 bis 15 Gew.%, bezogen auf Monomere(s) angewendet. Besonders bevorzugt wird Ethylbenzol als Lösungsmittel in den genannten Mengen. Obwohl das erfindungsgemäße Verfahren bevorzugt kontinuierlich durchgeführt wird, ist die Lehre auch auf eine diskontinuierliche Fahrweise, d.h. ein Masse-Suspensionsverfahren, übertragbar.

Die Polymerisation kann sowohl thermisch als auch in Gegenwart von den üblichen radikalischen Initiatoren durchgeführt werden. Als Initiatoren eignen sich insbesondere Dialkyl- oder Diacylperoxide, wie Dibenzoylperoxid, tert.-Butylperbenzoat oder tert.-Butylperoctoat. Die Katalysatoren werden in Mengen von 0,003 bis 0,2 Gew.-%, bezogen auf Monomere(s) angewendet. Die Polymerisationstemperaturen liegen im Bereich von 70 bis 190°C, wenn alle Verfahrens-

0049775

stufen berücksichtigt sind. Dem Fachmann ist bekannt, wie er die erste und alle weiteren Verfahrensstufen durchzuführen hat. Auch die in den verschiedenen Verfahrensstufen anzuwendenden Temperaturen sind dem Fachmann geläufig.

Die Polymerisation wird dann in üblicher Weise bis zu Umsätzen von 80 und 90% weitergeführt.

In der Tocknungsstufe bzw. Entgasungsstufe werden etwas höhere Temperaturen angewendet.

Als Kettenüberträger für das erfindungsgemäße Verfahren kommen die üblicherweise verwendeten Mercaptane mit 1 bis 14 C-Atomen in Betracht. Von den Mercaptanen hat sich besonders das tert.-Dodecylmercaptan bewährt. Die Menge an Mercaptan beträgt in der Regel 0,01 bis 0,2 Gew.%, bezogen auf das vinylaromatische Monomere. Die aus diesem Bereich ausgewählte Menge richtet sich nach dem gewünschten Schmelzfluß der herzustellenden Polymerisate. Aus technischen Gründen (Dosiergenauigkeit, Einmischbarkeit) ist es zweckmäßig, den Kettenüberträger nicht in reiner Form, sondern gelöst in einem Lösungsmittel, wie Toluol, Ethylbenzol, Xylol, Methylethylketon oder zusammen mit einem Gleitmittel wie Paraffinöl oder Butylstearat oder in einer kleinen Menge des Monomeren zuzuführen. Der Regler kann in der ersten Reaktionszone oder einer späteren Reaktionszone zugegeben werden.

Als Kettenverlängerer für das erfindungsgemäße Verfahren eignen sich bifunktionelle Verbindungen vom Typ der Diallyl-, Diacryl- oder Divinylverbindungen. Von den genannten Verbindungen sind die Diacrylverbindungen und von letzteren wiederum das Butandioldiacrylat bevorzugt. Diese Kettenverlängerer werden in Mengen von 50 bis 500 ppm, bezogen auf Monomere(s), angewendet. Wesentlich ist dabei, daß der Zeitpunkt der des Zusatzes der Kettenverlängerer frühestens bei einem Umsatz von $U_{max}$ = K erfolgt. Die Zugabe des Kettenverlängerers muß also kurz nach der Einstellung der Teilchengröße des dispers verteilten Kautschuks erfolgen.

Den nach dem erfindungsgemäßen Verfahren hergestellten schlagfesten Produkte können als weitere Komponenten übliche Zusatzstoffe zugemischt werden, wie sie für derartige schlagfeste Styropolymerisate üblich sind. Als solche Zusatzstoffe seien beispielsweise genannt: Füllstoffe, weitere verträgliche Kunststoffe, Farbstoffe oder Pigmente, Antistatika, Antioxidantien, Flammschutzmittel und Schmiermittel. Diese Zusatzstoffe werden in den dem Fachmann bekannten Mengen angewendet.

Die nach dem erfindungsgemäßen Verfahren hergestellten schlagfesten Formmassen lassen sich nach den für die Thermoplastverarbeitung üblichen Verfahren wie Extrusion und Spritzgießen, zu den verschiedenartigsten Formteilen verarbeiten. Dasselbe gilt auch für Abmischungen der nach dem erfindungsgemäßen Verfahren hergestellten Produkte mit anderen Thermoplasten.

Die in den Beispielen und Vergleichsversuchen aufgeführten Produkteigenschaften wurden wie folgt gemessen:

1. Die Viskositätszahl wurde in 0,5 gew.-%iger toluolischer Lösung bei $23^{\circ}C$ bestimmt.

2. Die mittlere Teilchengröße wird durch Auszählen anhand elektronenmikroskopischer Aufnahmen bestimmt.

Die Erfindung wird nachstehend anhand von Beispielen und Vergleichsversuchen näher erläutert. Alle darin angegebenen Teile und Prozente beziehen sich, sofern nichts anderes vermerkt ist, auf das Gewicht.

Vergleichsversuch A

6,4 Teile eines medium-cis-Polybutadiens werden in 6 Teilen Ethylbenzol und 85,58 Teilen Styrol gelöst. Nach Zusatz von 2 Teilen Paraffinöl und 0,02 Teilen tert.-Dodecylmercaptan wird die Mischung in einer Reaktionskaskade aus
2 Rührkesseln und 2 Reaktionstürmen polymerisiert. Die Feststoffgehalte (FG), Temperaturen und Rührgeschwindigkeiten
sind in der Tabelle zusammen mit den Eigenschaften der
Reaktionsprodukte auch der anderen Versuche aufgeführt.
Unter diesen Bedingungen erhält man eine Viskositätszahl
der Matrix von 80 [ml/g] und eine durchschnittliche Teilchengröße von 4-5 um.

Beispiel 1

Polymerisiert man eine Mischung von 6,4 Teilen Polybutadien, 80,58 Teilen Styrol, 6 Teilen Ethylbenzol, 2 Teilen
Paraffinöl und 0,02 Teilen tert.-Dodecylmercaptan in derselben Weise wie im Vergleichsversuch A, fügt aber kontinuierlich in den 3 Reaktor (1. Reaktionsturm) eine Lösung
von Butandioldiacrylat in Styrol so zu, daß 300 ppm Butandioldiacrylat, bezogen auf Styrol, in der Reaktionsmischung
vorliegen, so erhält man bei identischer Teilchengröße eine
Viskositätszahl von 95 [ml/g].

Vergleichsversuch B
Die Wiederholung des Vergleichsversuchs A ohne Zusatz von
tert.-Dodecylmercaptan führt zu einer Viskositätszahl von
91,8 [ml/g], aber zu einer mittleren Teilchengröße von nur
3 um. Versucht man nunmehr die Rührgeschwindigkeit auf
40 Upm im Reaktor 2 zu senken, um die Teilchengröße zu erhöhen, kommt es nach kurzer Zeit zu Gelanwachsungen im Reaktor und zu Stippenbildung im Produkt.

Beispiel 2

Die Wiederholung von Versuch A unter Verwendung von 500 ppm
Butandioldiacrylat, bezogen auf Styrol, führt so bei konstanter Teilchengröße zu einer Viskositätszahl von 113 $[ml/g]$
($\hat{=} \bar{M}_v$ = 280 000 viskosimetrisches Mittel). Derartig hohe
Molekulargewichte könnten ohne starke Temperatursenkung und
damit gravierendem Verlust an Raum-Zeit-Ausbeute nach den
üblichen Verfahren nicht mehr hergestellt werden. Davon abgesehen könnte man aus den oben erwähnten Gründen keine
Produkte mit großen Teilchen mehr herstellen.

Beispiel 3

Der Versuch A wurde wiederholt mit der Änderung, daß das Gemisch aus Styrol, Polybutadien etc. in einer 3-Turm-Kaskade
polymerisiert und das Butandioldiacrylat in den zweiten Turm
dosiert wurde.

Beispiel 4

Das Beispiel 3 wurde mit der Änderung wiederholt, daß dem
Reaktionsansatz 0,05 % Dibenzoylperoxid, bezogen auf
Styrol, zugefügt wurde.

Beispiel 5

Eine Lösung von 8 Teilen Kautschuk, 3 Teilen Paraffinöl,
88,8 Teilen Styrol sowie 0,02 Teilen tert.-Dodecylmercaptan und 0,1 Teilen Dicumylperoxid wurde bis zu einem Feststoffgehalt von 22 % polymerisiert. Dann wurde eine Konzentration von 300 ppm Butandioldiacrylat eingestellt und bis zu einem Feststoffgehalt von 30 % weiterpolymerisiert. Anschließend wurde wie üblich unter Zusatz von Wasser und Polyvinylpyrrolidon in Suspension bis zu vollständigem Umsatz auspolymerisiert. Die Perlen wurden gewaschen und wie üblich konfektioniert.

Die Temperaturen in den einzelnen Verfahrensstufen betrugen 110°C, 120°C, bzw. 130°C und die Rührgeschwindigkeiten im 1 m³-Reaktor 100 Upm bzw. 130 Upm. Die Teilchengröße betrug 5 um; die Viskositätszahl war 98,5 [ml/g]. Ohne Zusatz des Butandioldiacrylats wurde ein Produkt mit gleicher Teilchengröße, aber einer Viskositätszahl von 73 [ml/g] erhalten.

O.Z. 0050/034707

Tabelle

|  |  | Temperatur (°C) | FG (%) | Upm | VZ (ml/g) | Teilchen-größe (µm) |
|---|---|---|---|---|---|---|
| Vergleichsversuch A: | R 1 | 117 | 12,1 | 80 |  |  |
|  | R 2 | 130 | 26,0 | 60 |  |  |
|  | R 3 | 125 | 54,8 | 7 |  |  |
|  | R 4 | 130 | 80,0 | 3 | 80,1 | 4-5 |
| Beispiel 1: | R 1 | 117 | 12,3 | 80 |  |  |
|  | R 2 | 130 | 25,8 | 60 |  |  |
|  | R 3 | 125 | 55,2 | 7 |  |  |
|  | R 4 | 130 | 79,9 | 3 | 95,3 | 4-5 |
| Vergleichsversuch B: | R 1 | 117 | 11,8 | 80 |  |  |
|  | R 2 | 130 | 26,3 | 40 |  |  |
|  | R 3 | 125 | 55,4 | 7 |  |  |
|  | R 4 | 130 | 80,1 | 3 | 91,8 | 4 (Stippen/ Anbackungen) |
| Beispiel 2: | R 1 | 117 | 12,0 | 80 |  |  |
|  | R 2 | 130 | 26,3 | 60 |  |  |
|  | R 3 | 125 | 54,9 | 7 |  |  |
|  | R 4 | 130 | 79,7 | 3 | 113 | 4-5 |
| Beispiel 3: | R 1 |  | 35,1 | 100 |  |  |
|  | R 2 |  | 55,2 | 12 |  |  |
|  | R 3 |  | 80,0 | 3 | 94,5 | 4-5 |

O.Z. 0050/034707

|  |  | Temperatur (°C) | FG (%) | Upm | VZ (ml/g) | Teilchengröße (µm) |
|---|---|---|---|---|---|---|
| Beispiel 4: | R 1 |  | 34,7 | 60 |  |  |
|  | R 2 |  | 54,6 | 12 |  |  |
|  | R 3 |  | 79,8 | 3 | 93,8 | 4-5 |

Patentanspruch .

Verfahren zur kontinuierlichen Herstellung von mit Kautschuk modifizierten Polymerisaten von Vinylaromaten, wobei man ein Gemisch, das mindestens eine monomere aromatische Vinylverbindung und mindestens ein kautschukartiges, überwiegend aus 1,3-Dienen aufgebautes Polymerisat, in einem Anteil von 3 bis zu 16 Gew.-%, bezogen auf Monomere(s), sowie gegebenenfalls ein Lösungsmittel enthält, in Gegenwart von Mercaptanen als Kettenüberträger und gegebenenfalls von Radikalinitiatoren bei Temperaturen von 70 bis 190°C

a)   in einer ersten Reaktionszone unter Rühren bis zu einem maximalen Umsatz, $U_{max}$, bezogen auf Monomere(s) führt, der der Beziehung

$$U_{max} = K$$

genügt [K = Kautschukmenge in Gew.%, bezogen auf Monomere(s)],

b)   in einer zweiten Reaktionszone unter Rühren bis zu Umsätzen von bis zu etwa 50 Gew.% weiterpolymerisiert und

c)   in mindestens einer weiteren Reaktionszone bis zu Umsätzen von 80 bis 90 % weiterpolymerisiert, das Polymerisat in einer Entgasungszone von vinylaromatischen Monomeren und gegebenenfalls vom Lösungsmittel befreit und letztere in den Prozeß zurückführt, da_durch gekennzeichnet,_

daß man dem Reaktionsansatz frühestens beim Umsatz

$$U_{max} = K$$

eine Diallyl-, Diacryl- oder Divinylverbindung als Kettenverlängerer in Mengen von 50 bis 500 ppm, bezogen auf Monomere(s), zusetzt.